**Europäisches Patentamt**

**European Patent Office**

**Office européen des brevets**

(19)

(11) Veröffentlichungsnummer: **0 020 957**
**B1**

(12) **EUROPÄISCHE PATENTSCHRIFT**

(45) Veröffentlichungstag der Patentschrift:
18.05.83

(51) Int. Cl.³: **C 01 B 31/32**

(21) Anmeldenummer: **80102455.5**

(22) Anmeldetag: **06.05.80**

(54) **Verfahren zur Herstellung von Calciumcarbid.**

(30) Priorität: **27.06.79 DE 2925897**

(43) Veröffentlichungstag der Anmeldung:
**07.01.81 Patentblatt 81/1**

(45) Bekanntmachung des Hinweises auf die Patenterteilung:
**18.05.83 Patentblatt 83/20**

(84) Benannte Vertragsstaaten:
**BE DE FR GB NL**

(56) Entgegenhaltungen:
**FR-A-605 530**
**FR-A-1 063 300**
**FR-A-1 090 320**
**US-A-3 623 839**

**„Betriebswirtschaftliche Betrachtungen zum Karbidofen-Prozess", E. Liebscher Verlag Technik, Berlin (1952).**

(73) Patentinhaber: **HOECHST AKTIENGESELLSCHAFT, Postfach 80 03 20, D-6230 Frankfurt/Main 80 (DE)**
Patentinhaber: **RHEINISCHE BRAUNKOHLENWERKE AG., Postfach 41 08 40, D-5000 Köln 41 (DE)**

(72) Erfinder: **Kersting, Hans-Joachim, Dr., Zur Ville 7, D-5020 Frechen (DE)**
Erfinder: **Wolfrum, Erhard, Dr., Neue Aue 6, D-5160 Düren (DE)**
Erfinder: **Portz, Willi, Dr., Zum Schlagbaum 2, D-5042 Erftstadt (DE)**
Erfinder: **Strauss, Georg, Dr., Finkenweg 8, D-5042 Erftstadt (DE)**
Erfinder: **Goldmann, Edgar, Am Qualenberg 28, D-5042 Erftstadt (DE)**

Verfahren zur Herstellung von Calciumcarbid

Die Erfindung betrifft ein Verfahren zur Gewinnung von Calciumcarbid durch Umsetzung von Koks mit Kalk in Gegenwart von Sauerstoff in einem sauerstoffthermischen Ofen, auch carbothermischer Ofen genannt, wobei der Koks in einem Herdofen erzeugt wird.

Die Herstellung von sauerstoffthermischem Calciumcarbid ist seit langer Zeit bekannt [„Chemie-Ingenieur-Technik" 28 (1856), 4-5]. Dabei wird die für die Carbidbildung erforderliche Energie, die bei sehr hohen Temperaturen, etwa 2000 bis 2500° C, zur Verfügung stehen muss, durch Verbrennen von Koks mit hochprozentigem Sauerstoff geliefert. Nach Überwindung der technischen Schwierigkeiten wurden sauerstoffthermische Öfen mit einer Leistung von 100 t/d Carbid betrieben, wobei stückiger Steinkohlenkoks zum Einsatz kam. Wegen wirtschaftlicher Nachteile wurde jedoch die sauerstoffthermische Gewinnung von Carbid zugunsten der elektrothermischen Gewinnung aufgegeben. Bei dieser elektrothermischen Verfahrensweise ist es auch schon bekannt geworden, Braunkohlenkoks zum Einsatz zu bringen, doch ist eine Substitution von üblicherweise eingesetztem Steinkohlenkoks bzw. Anthrazit in Mengen, die im allgemeinen zwei Drittel wesentlich überschreiten, nicht möglich gewesen [„Braunkohle" 11 (1975), 361]. Man ging vielmehr in letzter Zeit dazu über, aus Kostengründen vom Einsatz von Braunkohlenformkoks in modernen Carbidöfen abzusehen. Darüber hinaus ist es bis jetzt nicht möglich, elektrothermische Carbidöfen ausschliesslich mit Feinkoks zu beschicken.

In jüngster Zeit gewinnt nun als Alternative zur elektrothermischen Erzeugung von Calciumcarbid die sauerstoffthermische Erzeugung wieder an Interesse, wenn auch die Wirtschaftlichkeit bisher noch nicht voll befriedigen konnte.

Es wurde nun überraschenderweise eine Möglichkeit gefunden, bei der sauerstoffthermischen Gewinnung von Calciumcarbid nicht nur Steinkohlenkoks bzw. Anthrazit oder Gemische daraus mit Braunkohlenkoks, sondern auch den Braunkohlenkoks allein als Einsatzstoff zu verwenden, welche in der Form von Feinkoks einen besonders preiswerten Kohlenstoffträger darstellt. Hierbei können gleichzeitig noch weitere Vorteile zur Verbesserung der sauerstoffthermischen Gewinnung von Calciumcarbid erzielt werden.

Die vorliegende Erfindung betrifft dementsprechend ein Verfahren zur Gewinnung von Calciumcarbid durch Umsetzung von Koks mit Kalk in Gegenwart von Sauerstoff in einem sauerstoffthermischen Ofen, welches dadurch gekennzeichnet ist, dass man Braunkohle mit einer Korngrösse bis zu 150 mm in einem Herdofen bei Abgastemperaturen von mindestens 750° C, vorzugsweise bei 1100-1500° C, verkokt, den so erhaltenen Koks mit der ihm noch innewohnenden Temperatur von über 500° C unmittelbar dem sauerstoffthermischen Ofenprozess zuführt und in dem sauerstoffthermischen Ofen unter Zusatz von Kalk und Sauerstoff Calciumcarbid gewinnt. Hierbei ist der Begriff des sauerstoffthermischen Ofenprozesses breit auszulegen; gemeint ist nicht nur die Zuführung des Kokses in das unmittelbare Reaktionsgefäss, vielmehr kann der Koks auch vor- bzw. zwischengeschalteten Apparaten zugeleitet werden, in welchen eine Vorabmischung mit anderen Möllerkomponenten — insbesondere Kalk — erfolgt, der dadurch aufgeheizt wird. Wichtig ist lediglich, dass die Gesamtwärme des Kokses direkt oder indirekt in den sauerstoffthermischen Ofen eingetragen wird.

Unter dem Begriff Kohle sollen alle kohlenstoffhaltigen Materialien, wie sie üblicherweise im Herdofen eingesetzt werden können, verstanden sein, z.B. Steinkohle, Braunkohle, Petrolkoks. In jedem Falle wird der im Herdofen anfallende Koks dem sauerstoffthermischen Ofen zugeführt. Von besonderem Vorteil ist der Einsatz von Braunkohle. Diese wird vorteilhaft auf einen Wassergehalt von unter etwa 25 Gew.%, insbesondere unter etwa 15 Gew.%, z.B. mittels Gegendruckdampf getrocknet. Ihre Korngrösse kann unter 20 mm, mit Vorteil unter 6 mm, insbesondere sogar unter 3 mm, gewählt werden. Es ist jedoch auch möglich, stückige, z.B. geformte Kohle mit bis zu 150 mm Grösse einzusetzen. Es ist allerdings stets darauf zu achten, dass der den Herdofen verlassende Koks maximal eine solche Korngrösse besitzt, dass sein Einsatz im sauerstoffthermischen Ofen möglich ist. Das erfindungsgemässe Verfahren ermöglicht es in vorteilhafter Weise, insbesondere auch feinkörnige Kokse einzusetzen.

Die Verkokung der kohlenstoffhaltigen Einsatzstoffe im Herdofen erfolgt in bekannter Weise. Die Abgastemperatur soll über der Calcinierungstemperatur liegen, d.h. im allgemeinen über 900° C, die Temperatur des abgezogenen Kokses bei der Calcinierungstemperatur über etwa 500° C. Derart erhaltene Kokse enthalten bei der vorgeschlagenen Kombination kein Wasser, 0,5-20,0 Gew.% Flüchtige und 3-12 Gew.% Asche. Der Gehalt an fixem Kohlenstoff kann 65-90 Gew.% und höher sein.

Gemäss einem weiteren Gedanken der vorliegenden Erfindung wird die Abwärme des Herdofens und auch des sauerstoffthermischen Ofens zumindest teilweise, vorteilhaft aber möglichst vollständig zur Erzeugung von Dampf genutzt. Dabei kann man dem Abhitzekessel eine Nachverbrennung zuordnen, in der die im Abgas befindlichen brennbaren Anteile verbrannt werden. Bei optimaler Nutzung der Abgaswärme können z.B. der Wärmeenergiebedarf für die Trocknung der Braunkohle sowie der gesamte Bedarf an elektrischem Strom der Anlage gedeckt und die Energie für die Sauerstofferzeugung bereitgestellt werden. Der erzeugte Dampf kann also in besonders vorteilhafter Ausführungsform der Erfindung mindestens teilweise zur Gewinnung des Sauerstoffs und zur Trocknung der im Herdofen eingesetzten Kohle benutzt werden.

Der aus dem Herdofen resultierende und dort abgezogene Koks wird unmittelbar dem Carbidofenprozess zugeführt. Dadurch werden gegenüber dem bekannten Verfahren mit Einsatz von Koks üblicher Art der Bedarf an Wärmeenergie zum Aufheizen des Kokses wesentlich verringert und alle Kosten der sonst üblichen Kokskühlung erspart. Die Einführung in den sauerstoffthermischen Ofen geschieht in üblicher Weise, z.B. über schleusen oder mit einem Trägergas oder auch durch Ausnutzung der Schwerkraft. Auch der Betrieb des Ofens wird in bekannter Weise durchgeführt. Das erhaltene Calciumcarbid entspricht in seinen Eigenschaften dem in elektrothermischen Öfen gewonnenen Carbid und kann, ebenso wie das Rohgas des Ofens, in üblicher Weise verwendet werden, wobei ein Energieüberschuss z.B. zur Umwandlung des Rohgases in ein Synthesegas eingesetzt werden kann.

Bei dem Verfahren der Erfindung kann man nun den Koks aus dem Herdofen über ein oder mehrere wärmeisolierte, als Fallrohre ausgebildete Beschickungsrohre dem Reaktionsgefäss des carbothermischen Ofens zuführen, wobei durch Druckausgleich im Reaktionsgefäss ein Gasaustritt über die Beschickungsrohre verhindert wird. Erfindungsgemäss kann in besonders vorteilhafter Weise der heisse Herdofenkoks mindestens mit Teilen des Kalkes von etwa gleicher Korngrösse gemischt und erst dieses Gemisch dem Reaktionsgefäss des carbothermischen Ofens zugeführt werden. Hierbei wird man im allgemeinen dem heissen Koks soviel Kalk zu dessen Vorab-Aufheizung zuführen, dass die Temperatur des Kalk/-Koks-Gemisches vor Eintritt in das Reaktionsgefäss bei etwa 600° C oder darunter liegt. Diese Arbeitsweise ermöglicht eine ohne Nachteile durchführbare technische Förderung des Gemisches, da die Mischtemperatur unter der sehr heissen Kokstemperatur liegt, indem ein Teil der Hitze vom Kalk aufgenommen wird. Dennoch gelangt die Gesamtwärme in das Reaktionsgefäss, wo als weiterer Vorteil Temperaturspitzen vermieden werden und ein gleichmässiger Temperaturverlauf im Reaktionsraum und Reaktionsablauf gewährleistet wird.

Erfindungsgemäss kann der heisse Koks bzw. das heisse Kalk/Koks-Gemisch mindestens teilweise in das Reaktionsgefäss des carbothermischen Ofens eingeblasen werden. Diese Einblasung erfolgt dann mittels Inertgas, d.h. sie wird insbesondere mit dem CO-haltigen Ofenabgas vorgenommen. Diese Ausführungsform der Erfindung, bei der eine Einblasung der aus dem Herdofen resultierenden Komponenten erfolgt, ermöglicht es, dass letzterer — z.B. aus Gründen der räumlichen Gestaltung — nicht über, sondern neben dem sauerstoffthermischen Ofen untergebracht ist.

Das erfindungsgemässe Verfahren ermöglicht es ferner, einen Carbidofen auch nur mit Braunkohlenkoks zu betreiben. Ein weiterer besonderer Vorteil ist es, dass jetzt auch die sauerstoffthermische Carbidherstellung vollständig mit Feinkoks durchgeführt werden kann. Die sauerstoffthermische Gewinnung von Calciumcarbid wird im Energiehaushalt und damit in der Wirtschaftlichkeit wesentlich verbessert. Dazu trägt auch bei, dass gegebenenfalls vorhandene kalkige Aschebestandteile der Kohlen in Calciumcarbid mit überführt werden.

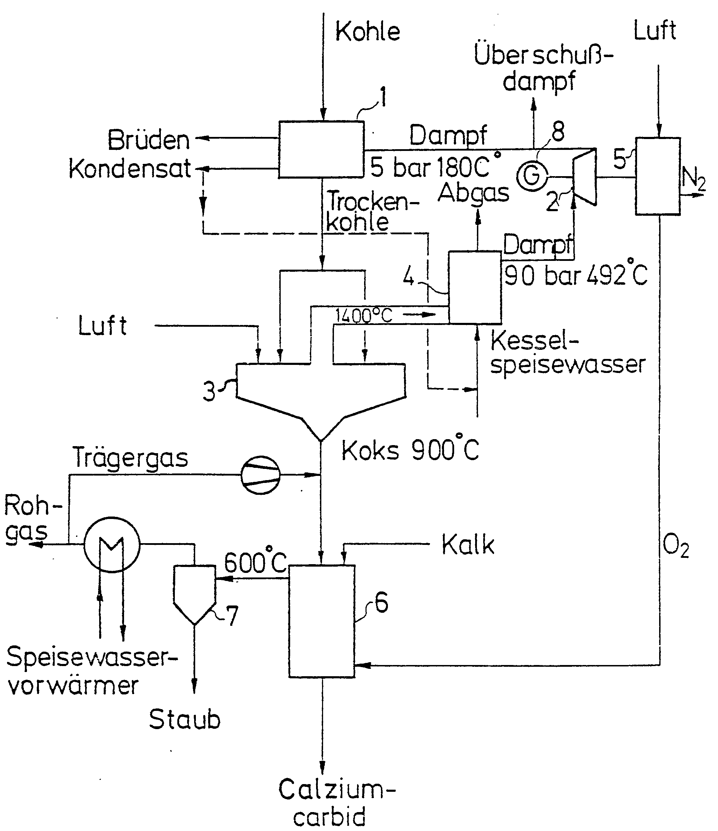

In der beigefügten Zeichnung wird das erfindungsgemässe Verfahren schematisch und beispielhaft dargestellt und in den nachfolgenden Beispielen erläutert, ohne im einzelnen auf die dargestellte und beschriebene Gesamtkombination beschränkt zu sein.

Auf eine Korngrösse von 0-10 mm gemahlene Braunkohle wird in der vorgeschalteten Anlage 1 unter Benutzung von Gegendruckdampf aus einer Turbine 2 auf einen Wassergehalt von 14 Gew.% getrocknet. Bei der Trocknung anfallende Brüden bzw. Kondensate werden abgeführt. Die getrocknete Kohle gelangt in den Herdofen 3, wo sie unter Zuführung von Luft bei einer Gasraumtemperatur von z.B. 1400° C verkokt wird. Die den Gasraum verlassenden Abgase werden in einem Abhitzekessel 4 zur Erzeugung von überhitztem Hochdruckdampf genutzt, der in die Turbine 2 geleitet wird. Die in der Turbine in mechanische Energie umgewandelte Leistung wird zur Tieftemperaturzerlegung von Luft in der Anlage 5 und damit zur Gewinnung des im sauerstoffthermischen Carbidofen 6 benötigten Sauerstoffs sowie zur Stromerzeugung im Generator 8 benutzt. Der aus dem Herdofen 3 mit einer Temperatur von 900° C abgezogene Koks wird z.B. mit Hilfe eines Strahlsystems in einem aus dem Abgas des Carbidofens gebildeten Trägergasstrom in das Reaktionsgefäss eingegeben, in das ferner Kalk und der aus der Anlage 5 stammende Sauerstoff eingeführt werden. Das Abgas des Carbidofens 6, das diesen mit etwa 600° C verlässt, wird nach Entstaubung im Zyklon 7 zur Aufwärmung von Kesselspeisewasser benutzt. Ein Teil des Abgases kann dann als Trägergas für den Herdofenkoks dienen. Aus dem Carbidofen 6 wird das Carbid entnommen. Da das Rohgas des Ofens zu ca. 87 Vol.% aus CO und zu etwa 12 Vol.% aus $H_2$ besteht, ist angezeigt, dieses Abgas in einem Konverter unter Ausnutzen des vorerwähnten Energieüberschusses zu Synthesegas zu konvertieren.

*Beispiel 1:* (Vergleichsbeispiel)

28 t/h Braunkohlenkoks werden zusammen mit 15 t/h Kalk (CaO-Gehalt 94 Gew.%) und 17 300 m³ (i.N.) pro Stunde Sauerstoff in einem sauerstoffthermischen Ofen zu 13 t/h Calciumcarbid (Carbidgehalt 80 Gew.%) umgesetzt. Aus dem Carbidofen werden 43 000 m³ (i.N.) pro Stunde Rohgas mit einer Temperatur von etwa 600° C gewonnen.

*Beispiel 2:* (erfindungsgemäss)

Es wird wie in Beispiel 1 verfahren, wobei der Koks nicht abgekühlt, sondern heiss dem Reaktor zugeleitet wird. Aus 139 t/h Rohbraunkohle (Wassergehalt 60,0 Gew.%) werden 65 t/h Trokkenkohle (Körnung bis 10 mm, Wassergehalt 14 Gew.%) gewonnen. Wegen der heissen Koksaufgabe sinkt die erforderliche Koksmenge auf 23 t/h, der hinter dem Herdofen eine Temperatur von etwa 900° C besitzt. Der Koks wird mit 7,5 t/h Kalk einer Körnung bis 5 mm gemischt und das dann noch etwa 600° C heisse Gemisch dem Reaktionsgefäss zugeführt und dort mit dem Restkalk und — wegen des heissen Kokseintrages — mit einer auf 13 400 m³ (i.N.) pro Stunde reduzierten Sauerstoffmenge umgesetzt.

*Beispiel 3:* (erfindungsgemäss)

Es wird wie in Beispiel 2 verfahren, wobei jedoch die 23 t/h Koks, die hinter dem Herdofen eine Temperatur von etwa 900° C besitzen, mit dieser Temperatur dem sauerstoffthermischen Ofenprozess zugeführt werden. Der Koks wird bei diesem Prozess zunächst mit 15 t/h Kalk gemischt und das dann doch etwa 400° C heisse Gemisch dem Reaktionsgefäss zugeführt und dort mit Sauerstoff umgesetzt.

## Patentansprüche

1. Verfahren zur Gewinnung von Calciumcarbid durch Umsetzung von Koks mit Kalk in Gegenwart von Sauerstoff in einem sauerstoffthermischen Ofen, dadurch gekennzeichnet, dass man Braunkohle mit einer Korngrösse bis zu 150 mm in einem Herdofen bei Abgastemperaturen von mindestens 750° C verkokt, den so erhaltenen Koks mit der ihm noch innewohnenden Temperatur von über 500° C unmittelbar dem sauerstoffthermischen Ofenprozess zufürt und in dem sauerstoffthermischen Ofen unter Zusatz von Kalk und Sauerstoff Calciumcarbid gewinnt.

2. Verfahren nach Anspruch 1, dadurch gekennzeichnet, dass man die Braunkohle mit einer Korngrösse von 0-20 mm, vorzugsweise von 0-6 mm, und einem Wassergehalt von nicht mehr als 25 Gew.% einsetzt.

3. Verfahren nach einem des beiden Ansprüche 1 oder 2, dadurch gekennzeichnet, dass man die Abwärme des Herdofens und auch des sauerstoffthermischen Ofens mindestens teilweise zur Erzeugung von Dampf ausnutzt.

4. Verfahren nach Anspruch 3, dadurch gekennzeichnet, dass der erzeugte Dampf mindestens teilweise zur Gewinnung des Sauerstoffs benutzt wird.

5. Verfahren nach Anspruch 3, dadurch gekennzeichnet, dass der erzeugte Dampf mindestens teilweise zur Trocknung der im Herdofen eingesetzten Kohle benutzt wird.

6. Verfahren nach einem der vorhergehenden Ansprüche, dadurch gekennzeichnet, dass man den Koks aus dem Herdofen über ein oder mehrere wärmeisolierte, als Fallrohre ausgebildete Beschickungsrohre dem Reaktionsgefäss des carbothermischen Ofens zufürt, wobei durch Druckausgleich im Reaktionsgefäss ein Gasaustritt über die Beschickungsrohre verhindert wird.

7. Verfahren nach einem der vorhergehenden Ansprüche, dadurch gekennzeichnet, dass der heisse Herdofenkoks mindestens mit Teilen des Kalkes von etwa gleicher Korngrösse gemischt und erst das Gemisch dem Reaktionsgefäss des carbothermischen Ofens zugeführt wird.

8. Verfahren nach Anspruch 7, dadurch gekennzeichnet, dass dem heissen Koks soviel Kalk zu dessen Vorab-Aufheizung zugeführt wird, dass die Temperatur des Kalk/Koks-Gemisches vor Eintritt in das Reaktionsgefäss bei etwa 600° C oder darunter liegt.

9. Verfahren nach einem der vorhergehenden Ansprüche, dadurch gekennzeichnet, dass der heisse Koks bzw. das heisse Kalk/Koks-Gemisch mindestens teilweise in das Reaktionsgefäss des carbothermischen Ofens eingeblasen werden.

10. Verfahren nach Anspruch 9, dadurch gekennzeichnet, dass diese Einblasung mittels Inertgas, insbesondere mit dem CO-haltigen Ofenabgas vorgenommen wird.

## Claims

1. Process for the production of calcium carbide by reacting coke with lime in the presence of oxygen in an oxygen-thermal furnace, characterised in that lignite with a particle size of up to 150 mm is cokefied in a hearth furnace at off-gas temperatures of at least 750° C, the coke so obtained with an inherent temperature of more than 500° C is directly introduced into the oxygen-thermal furnace process, and calcium carbide is produced in the oxygen-thermal furnace with addition of lime and oxygen.

2. Process as claimed in claim 1, wherein the lignite is used in the form of particles with a size of 0 to 20 mm, preferably 0 to 6 mm, and contains not more than 25 weight % of water.

3. Process as claimed in claim 1 or 2, wherein waste heat coming from the hearth furnace and oxygen-thermal furnace is used at least partially for the generation of steam.

4. Process as claimed in claim 3, wherein the steam generated is used at least partially for the production of oxygen.

5. Process as claimed in claim 3, wherein the steam generated is used at least partially for drying the coal used in the hearth furnace.

6. Process as claimed in any of the preceding claims, wherein the coke coming from the hearth furnace is introduced into the reactor of the carbothermal furnace through one or more heat-insultated feed pipes, designed as down pipes, the escape of gas through the feed pipes being avoided by pressure equalization inside the reactor.

7. Process as claimed in any of the preceding claims, wherein the hot hearth furnace coke is mixed at least with a portion of lime approximately identical in size, and the resulting mixture is introduced into the reactor of the oxygen-thermal furnace.

8. Process as claimed in claim 7, wherein the hot coke is admixed with a quantity of lime, which is thereby preheated, sufficient for the resulting lime/coke mixture to have a temperature of about 600° C or less, prior to its introduction into the reactor.

9. Process as claimed in any of the preceding claims, wherein the hot coke or hot lime/coke mixture is injected at least partially into the reactor of the carbo-thermal furnace.

10. Process as claimed in claim 9, wherein the injection is effected by means of an inert gas, especially with the use of CO-containing furnace off-gas.

**Revendications**

1. Procédé de préparation du carbure de calcium par réaction de coke et de chaux en présence d'oxygène dans un four oxygénothermique, caractérisé en ce que l'on cokéfie du lignite d'une granulométrie jusqu'à 150 mm dans un four à sole à des températures du gaz de sortie d'au moins 750° C, on introduit directement dans le procédé au four oxygénothermique le coke obtenu à sa température propre de plus de 500° C et, avec addition de chaux et d'oxygène, on produit le carbure de calcium dans le four oxygénothermique.

2. Procédé selon la revendication 1, caractérisé en ce que le lignite utilisé consiste en particules d'une grosseur de 0 à 20 mm, de préférence de 0 à 6 mm, et présente une teneur en eau de 25% en poids au maximum.

3. Procédé selon l'une des revendications 1 ou 2, caractérisé en ce que l'on utilise la chaleur perdue du four à sole et celle du four oxygénothermique au moins partiellement pour la production de vapeur.

4. Procédé selon la revendication 3, caractérisé en ce que la vapeur produite est au moins partiellement utilisée pour la production d'oxygène.

5. Procédé selon la revendication 3, caractérisé en ce que la vapeur produite est utilisée au moins partiellement pour le séchage du charbon utilisé dans le four à sole.

6. Procédé selon l'une des revendications précédentes, caractérisé en ce que le coke provenant du four à sole est introduit par une ou plusieurs conduites d'alimentation, isolée thermiquement et conçues sous forme de conduites de descente, dans le récipient de réaction du four oxygénothermique, la sortie de gaz par les conduites d'alimentation étant évitée par une égalisation de pression dans le récipient de réaction.

7. Procédé selon l'une des revendications précédentes, caractérisé en ce que le coke chaud du four à sole est d'abord mélangé avec des portions de chaux de granulométrie presque identique, le mélange étant ensuite introduit dans le récipient de réaction du four carbothermique.

8. Procédé selon la revendication 7, caractérisé en ce que le coke chaud est mélangé avec autant de chaux pour son préchauffage qu'il le faut pour que la température du mélange chaux/coke soit égale ou inférieure à environ 600° C avant l'introduction dans le récipient de réaction.

9. Procédé selon la revendication de l'une des revendications précédentes, caractérisé en ce que le coke chaud ou le mélange chaud coke/chaux est injecté au moins partiellement dans le récipient de réaction du four carbothermique.

10. Procédé selon la revendication 1, caractérisé en ce que l'on effectue l'injection à l'aide d'un gaz inerte, en particulier à l'aide du gaz résiduaire du four contenant du CO.

Kohle

Luft

Überschußdampf

1

Brüden

Dampf
5 bar 180C°

8

Kondensat

2

5

N₂

Trockenkohle

Abgas

Luft

4

Dampf
90 bar 492°C

1400°C →

Kesselspeisewasser

3

Koks 900°C

Trägergas

Rohgas

Kalk

O₂

600°C

6

7

Speisewasservorwärmer

Staub

Calziumcarbid